Europäisches Patentamt

European Patent Office

Office européen des brevets

(11) Veröffentlichungsnummer : **0 078 531**
**B1**

# (12) EUROPÄISCHE PATENTSCHRIFT

(45) Veröffentlichungstag der Patentschrift :
30.12.86

(21) Anmeldenummer : 82110069.0

(22) Anmeldetag : 02.11.82

(51) Int. Cl.⁴ : **B 01 D  3/14**, C 12 F  1/00,
**B 01 D  1/26**

(54) Verfahren zur kontinuierlichen Rektifikation eines Alkohole enthaltenden FLüssigkeitsgemisçhes.

(30) Priorität : 04.11.81 DE 3143734

(43) Veröffentlichungstag der Anmeldung :
11.05.83 Patentblatt 83/19

(45) Bekanntmachung des Hinweises auf die Patenterteilung : 30.12.86 Patentblatt 86/52

(84) Benannte Vertragsstaaten :
AT BE CH DE FR GB IT LI NL SE

(56) Entgegenhaltungen :
DE-A- 3 007 138
FR-A- 2 156 765
US-A- 2 181 731
US-A- 3 179 159
US-A- 3 259 553
US-A- 3 303 106
US-A- 3 428 107
US-A- 3 926 739
US-A- 4 305 790
Chemische Technik, VEB-Verlag, September 1980, S.
Weiss, Seiten 448-451

(73) Patentinhaber : HOECHST AKTIENGESELLSCHAFT
Postfach 80 03 20
D-6230 Frankfurt am Main 80 (DE)

(72) Erfinder : Heck, Günter
Buchenweg 1
D-6200 Wiesbaden (DE)
Erfinder : Lienerth, Aladar, Dr.
Am Steinbruch 6
D-6233 Kelkheim (Taunus (DE)
Erfinder : Malow, Egon
Herderstrasse 25
D-6203 Hochheim am Main (DE)
Erfinder : Schwarz, Karl-Heinz
Höhenweg 8
D-6237 Liederbach (DE)
Erfinder : Faust, Uwe, Dr.
Kelkheimer Strasse 27
D-6233 Kelkheim (Taunus) (DE)

## Beschreibung

Gegenstand der Erfindung ist ein Verfahren zur kontinuierlichen Rektifikation eines Alkohole enthaltenden Flüssigkeitsgemisches, insbesondere die Rektifikation einer von Schwebstoffen weitgehend oder vollständig befreiten, vergorenen Maische, wie sie bei der Fermentierung eines kohlehydrathaltigen Substrats anfällt.

Es sind bereits zahlreiche Verfahren zur Rektifikation von Äthanol aus wässrigen Flüssigkeitsgemischen beschrieben. Steigende Energiekosten haben dabei die Aufmerksamkeit immer stärker auf solche Verfahren gelenkt, in denen die Wirtschaftlichkeit im Vergleich zu konventionellen Destillationsverfahren durch eine bessere Nutzung der meist in Form von Wasserdampf zugeführten Wärmeenergie erhöht ist. Beschrieben sind bereits Rektifikationen, bei denen Alkohol-Wasser-Gemische durch eine Zweifachnutzung der Energie unter Verwendung von zwei Kolonnen mit unterschiedlichen Drücken aufgetrennt werden. Dabei wird der Kopfproduktdampf der ersten Kolonne für die Heizung der nachgeschalteten zweiten Kolonne verwendet. Damit sind gegenüber bekannten Destillationsverfahren Einsparungen an Energie um etwa 40 bis 50 % möglich geworden, andererseits ist aber durch die zweite Destillationskolonne auch ein zusätzlicher Investitionsaufwand erforderlich (vgl. S. Weiß, Chem. Techn., 32. Jahrgang, 448-451 (1980)).

Die Entwicklung ökonomischer Verfahren zur kontinuierlichen Rektifikation von Alkohole enthaltenden Flüssigkeiten hat natürlich vor allem für die Auftrennung von Äthanol-Wasser-Gemischen große Bedeutung. Da derartige Gemische häufig durch die Fermentation eines kohlehydrathaltigen Substrats erzeugt werden und die aus dem Gärungsbehälter abgezogene, vergorene Maische noch erhebliche Mengen gelöster organischer und anorganischer Stoffe wie Hefereste, Eiweißstoffe und Nährsalze enthält, ergeben sich daraus zusätzliche verfahrenstechnische Probleme. Vor allem muß dafür Sorge getragen werden, daß sich in den Destillationskolonnen und den übrigen Apparaturen keine Ablagerungen von Feststoffen bilden, die nach kurzer Laufzeit die Reinigung der Anlage erforderlich machen würden.

Aus diesem Grund sieht das in der DE-A-30 07 138 beschriebene Verfahren zur Herstellung von Äthanol vor, daß aus der dem Gärungsbehälter entnommenen Flüssigkeit zunächst die Hefereste durch Zentrifugieren abgetrennt werden und die hefefreie Phase dann in einen einfachen Verdampfer eingespeist wird. In diesem Verdampfer wird die Flüssigkeit teilweise zu einer äthanolreichen ersten Dampfphase, die man einer Destillationskolonne zuführt, und teilweise zu einer ersten flüssigen Bodenphase aufgeteilt. Da dieser Trennvorgang mit einem erheblichen Verbrauch von Energie verbunden ist, ist bereits überlegt worden, ob die Abtrennung der Schwebstoffe aus der vergorenen Maische durch einen kostengünstigeren Verfahrensschritt erfolgen kann.

Aus der DE-B-29 38 339 ist nun ein Verfahren zur kontinuierlichen Vergärung von wässriger Maische für die Gewinnung von Äthanol bekannt, bei dem durch die Verwendung einer flokulierenden, untergärigen Hefe in einem Abscheider unter der Einwirkung der Schwerkraft ein so schnelles Absetzen der Schwebstoffe erreicht wird, daß die sich im Oberteil des Abscheiders bildende Klarphase schon nach einer Verweilzeit von vorzugsweise 5 bis 15 Minuten so weitgehend von Schwebstoffen befreit ist, daß sie nicht mehr durch eine Maischekolonne gereinigt werden muß, sondern direkt in eine Destillationskolonne eingespeist werden kann.

Es stellte sich deshalb die Aufgabe, weitere Energieeinsparungen bei der Rektifikation eines Alkohole enthaltenden Flüssigkeitsgemisches zu erreichen, wobei es sich für die Gewinnung von Äthanol besonders anbot, von einer von Schwebestoffen weitgehend oder vollständig befreiten, vergorenen Maische auszugehen, wie sie bei dem in der DE-B-29 38 339 beschriebenen Verfahren erhalten wird.

Erfindungsgegenstand ist deshalb ein Verfahren zur kontinuierlichen Rektifikation eines Alkohole enthaltenden Flüssigkeitsgemisches, insbesondere einer von Schwebstoffen weitgehend oder vollständig befreiten, vergorenen Maische, bei dem das Flüssigkeitsgemisch auf mindestens drei Destillationskolonnen mit von Kolonne zu Kolonne abnehmenden Betriebsdrücken parallel aufgeteilt wird, dadurch gekennzeichnet, daß man dem Supf der mit dem höchsten Druck gefahrenen Kolonne Direktdampf, der eine Temperatur von 130 bis 160° hat, zuführt, aus dem Kopfdampf der Kolonnen durch indirekten Wärmetausch Direktdampf gewinnt und diesen dem Abtriebsteil der jeweils nachfolgenden zweiten Kolonne zum direkten Heizen zuführt. Der Sumpfablauf der Kolonnen kann entspannt, und der enthaltene Dampf der jeweils nachfolgenden Kolonne zugeführt werden. Der durch Wärmeaustausch kondensierende, aufkonzentrierte Alkohol kann einer Azeotropdestillation zugeführt und mit dem Kopfprodukt dieser Destillation der Direktdampf von 130 bis 160 °C für die mit dem höchsten Druck gefahrenen Destillationskolonne erzeugt werden.

Wenn dieses Verfahren zur Gewinnung von Äthanol aus einer vergorenen Maische eingesetzt wird, dann muß der Schwebestoffgehalt der Maische vorher z. B. in einem Abscheider auf weniger als 0,5 Gew.-%, vorzugsweise auf weniger als 0,1 Gew.-% gesenkt worden sein, um die Gefahr von Verlegungen von Böden, Ventilen, Sumpfkochern und anderen Apparaturen zu vermeiden. Auf den Einsatz einer Maischekolonne kann verzichtet werden, wenn bei dem erfindungsgemäßen Verfahren eine von Schwebestoffen weitgehend oder vollständig befreite Maische eingesetzt wird, wie sie nach dem Verfahren der DE-B-29 38 339 erhalten wird.

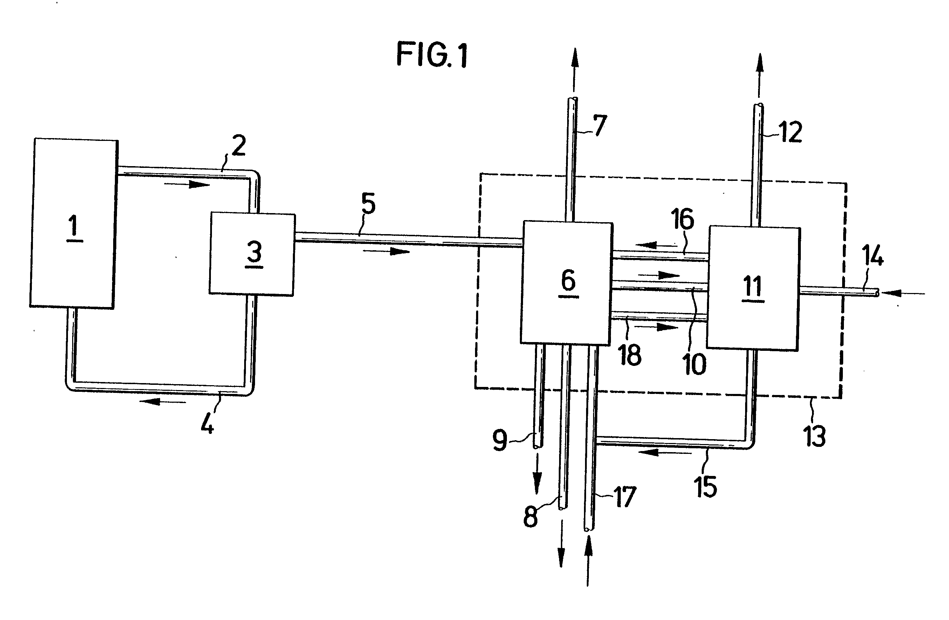

Figur 1 zeigt einen schematischen Überblick über das Verfahren, wenn es zur Gewinnung von absolutem Äthanol eingesetzt werden soll und hierzu direkt mit einem Fermenter verbunden ist. Dabei fließt aus dem Fermenter (1) die vergorene Maische über die Leitungen (2) zu dem Schwerkraft-Abscheider (3), in dem sich die flokulierende, untergärige Hefe schnell absetzt und als feststoffreiche Phase durch Leitung (4) wieder in den Fermenter (1) zurückgeführt wird. Die im oberen Teil des Abscheiders (3) entstandene feststoffarme Klarphase wird durch Leitung (5) nun der Alkohol-Aufkonzentrierung (6) zugeleitet, wo in einem mehrstufigen Destillationsprozeß zunächst etwa 94 Gew.-% Äthanol gewonnen wird. Gleichzeitig werden hier Leichtsieder über Leitung (7), Fuselöle über Leitung (8) und die Schlempe, deren Alkoholgehalt unter 1 000 Gew. p.p.m. liegt, über Leitung (9) abgetrennt.

Der in der Aufkonzentrierungsanlage gewonnene Äthanol fließt nun über die Leitung (10) einer ein- oder mehrstufigen Alkoholabsolutierung (11) zu, wird dort durch eine azeotrope Destillation bis zu einem Gehalt von bis zu mehr als 99,5 Gew.-% entwässert und über die Leitung (12) abgelassen.

Die für die Rektifikation erforderliche Wärmeenergie wird der aus Alkoholaufkonzentrierung (6) und Alkoholabsolutierung (11) bestehenden Gesamtanlage (13) in Form von Heizdampf durch die Leitung (14) zugeführt, wobei er eine Temperatur zwischen 150 und 230 °C haben soll. Die Wärmeenergie des Heizdampfes wird zunächst dazu verwendet, um die Destillationskolonnen der Alkoholabsolutierung (11) zu betreiben. Das anfallende Heizdampfkondensat wird über die Leitung (15) mit dem Kesselspeisewasser der Leitung (17) vermischt und zur Erzeugung von Direktdampf für die Aufkonzentrierung eingesetzt. Die dafür erforderliche Energie wird aus dem über (16) abgeleiteten Kopfdampf der Absolutierung mittels hier nicht gezeichneter Wärmeaustauschern gewonnen. Das abgekühlte Kopfdampf-Kondensat wird dann über (18) wieder in die Alkohol-Absolutierung (11) zurückgeführt.

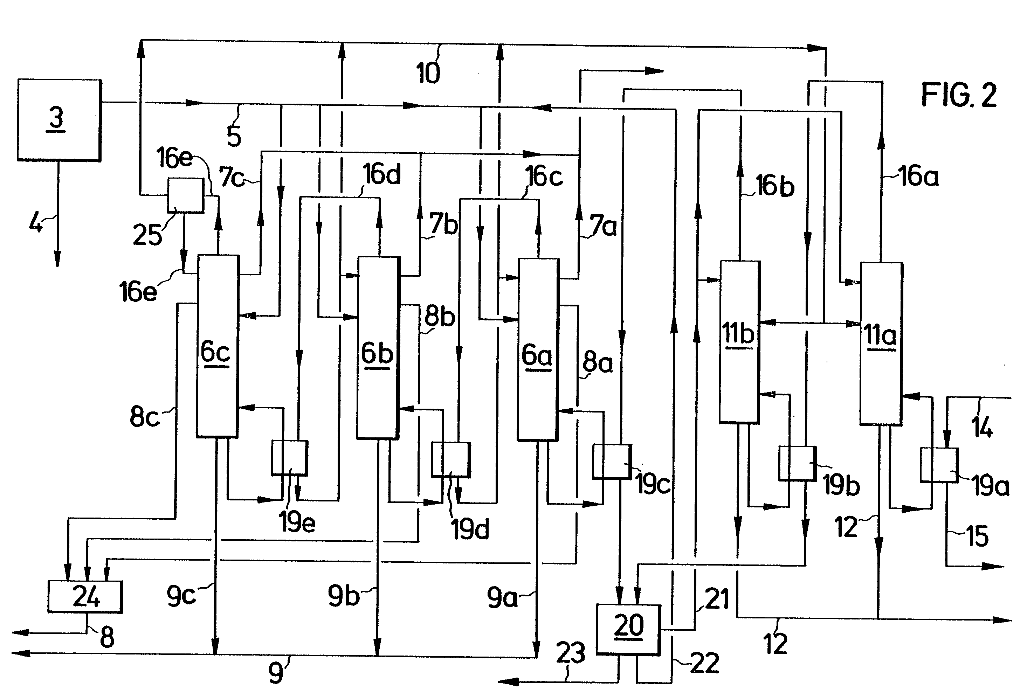

Figur 2 zeigt den Aufbau einer Anlage zur Durchführung eines Rektifikationsverfahrens, wie es generell aus Chem. Techn., 32. Jahrgang, 448-451 (1980) bekannt ist. Die Alkoholaufkonzentrierung (6) ist hier durch drei hintereinander geschaltete Destillationskolonnen (6a, 6b und 6c) dargestellt und die Alkohol-Absolutierung durch die Kolonnen (11a) und (11b) gezeigt. Während auf die Destillationskolonnen der Alkoholaufkonzentrierung (6a) bis (6c) die Klarphase mittels der Leitung (5) parallel aufgeteilt wird, findet eine entsprechende Parallelaufteilung des hier gewonnenen, etwa 94 Gew.-% Äthanols auf die Kolonnen (11a) und (11b) der Absolutierungs-Anlage durch die Leitung (10) statt. Für das in Figur 2 dargestellte Verfahren ist die Verwendung von Sumpfkochern (19a) bis (19e) charakteristisch. In ihnen wird die Energie des heißen Kopfdampfes über die Leitungen (16a) bis (16d) den Sumpfkochern zugeführt und dort auf einen Flüssigkeitsstrom übertragen, der dem Sumpf der Destillationskolonnen entnommen ist und im Kreislauf dann wieder zu ihnen gelangt. Bei dieser Fahrweise ist nicht auszuschließen, daß bei kontinuierlichem Betrieb im Laufe längerer Zeiträume sich vor allem in den Sumpfkochern Belege bilden.

Figur 2 läßt auch erkennen, daß das Kopfdampf-Kondensat der Kolonnen (11a) und (11b), das aus einem azeotropen Gemisch von Äthanol, Wasser und einer wasserunlöslichen Flüssigkeit wie Benzol, Toluol, Cyclohexan, Hexan oder anderen hierfür als geeignet bekannten Substanzen besteht, über die Leitungen (16a) und (16b) in einem Abscheider (20) gesammelt wird, aus dem die organische Phase (21) wieder entnommen und in die Alkoholabsolutierung zurückgeführt wird, während die wäßrige Phase (22), die etwa 6 Gew.-% Äthanol enthält, in die Kolonnen der Alkoholaufkonzentrierung eingespeist wird. Etwaige sich im Abscheider (20) ansammelnde Verunreinigungen können über die Leitung (23) abgelassen werden.

Bei der Vergärung von Maische bilden sich stets auch in geringen Mengen Leichtsieder wie Methanol, Azetaldehyd und Essigsäureäthylester. Sie werden über die Leitungen (7a) bis (7c) abgetrennt.

Die in den Destillationskolonnen (6a) bis (6c) anfallenden Fuselöle werden über die Leitungen (8a) bis (8c) dem Sammelbehälter (24) zugeführt. Die nahezu alkoholfreie Schlempe verläßt die Anlage durch die Leitungen (9a) bis (9c).

Für das dargestellte Rektifikationsverfahren ist ein stufenweiser Druck- und Temperaturabfall von einer Destillationskolonne zur jeweils nachfolgenden charakteristisch. Die Kolonne (11a), die von dem Heizdampf als erste erreicht wird, weist die höchste Temperatur und den höchsten Druck auf, der bis zu 20 bar betragen kann. Da bei Druckzunahme der Wassergehalt des azeotropen Destillats erheblich ansteigt, vereinfacht sich hierdurch die Entwässerung.

Bis zum Eintritt in die erste Kolonne der Alkoholaufkonzentrierung (6a) hat sich der Heizdampf auf Temperaturen von 130 bis 160 °C abgekühlt, so daß in dieser Kolonne nur noch ein Druck von 3 bis 4 bar auftritt, der sich in den nachgeschalteten Kolonnen schließlich bis auf einen Druck von 0,2 bis 0,4 bar verringert. In der Kolonne (6c) ist nur noch eine Temperatur von 70 bis 80 °C festzustellen. Durch diese niedrigen Druck- und Temperaturwerte in der Kolonne (6c) der Alkohol-Aufkonzentrierung wird die Gefahr von Zersetzungen von Eiweißprodukten, die in geringer Menge durch die Leitung (5) mit der Klarphase in die Destillationskolonnen gelangen, so stark verringert, daß sich dort keine wesentlichen Beläge auf dem Boden der Destillationskolonne oder in dem Sumpfkocher bildet. Der diese letzte Kolonne verlassende Kopfdampf gelangt über Leitung (16e) zu einem Kondensator (25) und von dort ebenfalls zur Sammelleitung (10).

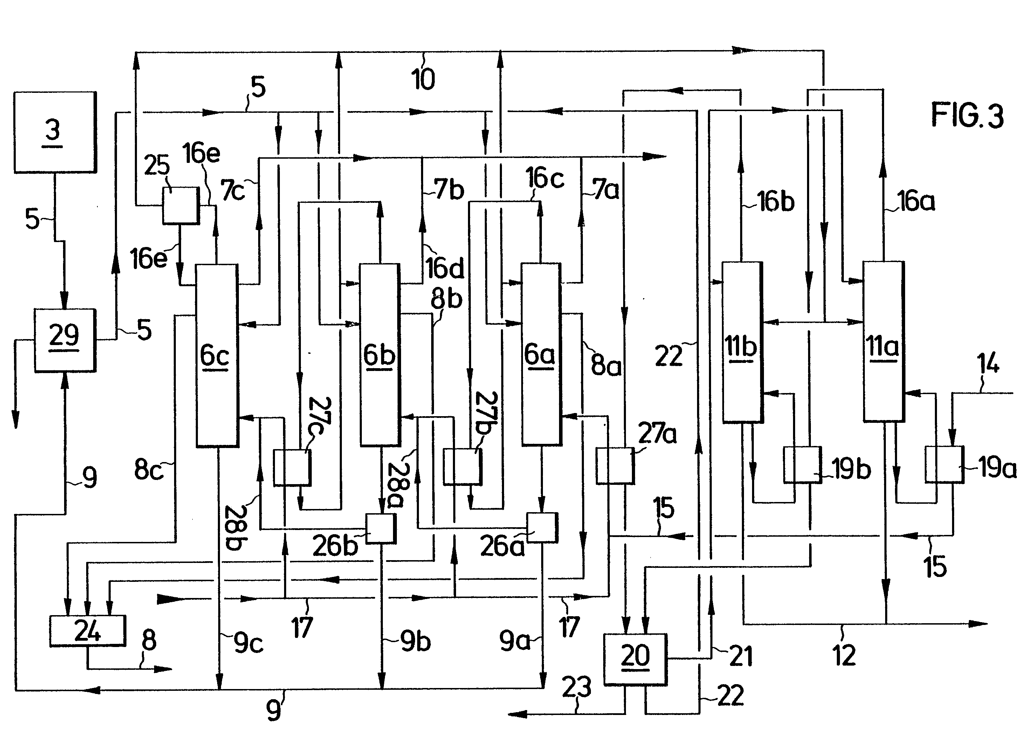

Figur 3 zeigt die erfindungsgemäße Verfahrensweise, die erhebliche technische Vorteile gegenüber der anhand von Figur 2 diskutierten aufweist. Bei ihr werden zur Alkohol-Aufkonzentrierung keine Sumpfkocher mehr verwendet, sondern Dampferzeuger (27a) bis (27c), die die Herstellung von Direktdampf aus dem über (17) zugeleiteten Kesselspeisewasser gestatten. Der so erzeugte Dampf wird direkt in die Destillationskolonnen eingeleitet, wodurch eine besonders saubere Fahrweise möglich wird, mit der vor allem vermieden wird, daß der verschmutzende Bestandteile enthaltende Sumpf immer wieder im Kreislauf durch den Wärmeaustauscher geleitet wird. Gleichzeitig wird so der notwendige Wärmeaustauscher durch Anwendung von Gegenstrom-Wärmeaustauschern in den Bereich niedrigerer Temperatur verlegt.

Darüberhinaus zeigt Figur 3 aber auch, wie bei dem erfindungsgemäßen Verfahren Wärmeenergie durch den Einsatz von Entspannungsverdampfern mehrfach genutzt wird. Die aus den Destillationskolonnen der Alkohol-Aufkonzentrierung (6a) und (6b) abgeleitete Schlempe wird nämlich in Entspannungsgefäße (26a) und (26b) eingeleitet, in denen aus der erwärmten Schlempe Entspannungsdampf gewonnen wird, der über die Leitungen (28a) und (28b) zusammen mit dem aus dem Kopfdampf der gleichen Kolonne durch einen Wärmeaustauscher (27b) und (27c) erhaltenen Direktdampf dem Abtriebsteil der nachfolgenden Kolonne zugeführt wird.

Eine weitere Energieausnutzung wird schließlich noch dadurch erreicht, daß die Schlempe über Leitung (9) in einen Wärmeaustauscher (29) gepumpt wird, wo sie ihre Restwärme an die aus dem Fermenter (3) kommende Klarphase übergibt.

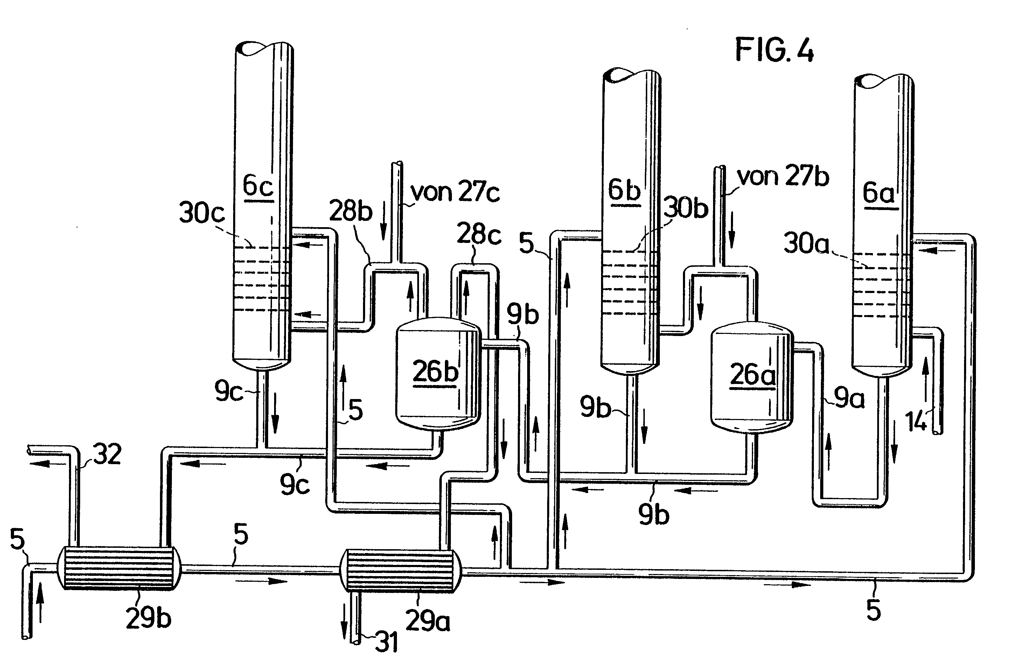

Die Einzelheiten des erfindungsgemäßen Verfahrens werden durch Figur 4 besonders deutlich dargestellt. Dort sind die drei hintereinander geschalteten Destillationskolonnen (6a), (6b) und (6c), die bei drei verschiedenen Druckstufen betrieben werden, gezeigt. Im Innern der Destillationskolonnen sind Siebböden (30a) bis (30c) zu erkennen, die einen Lochdurchmesser von bis zu 20 mm aufweisen sollen und vorzugsweise mit Polytetrafluoräthylen überzogen sind. Aus der Kolonne (6a) wird über den Sumpf die erwärmte Schlempe abgezogen und dem Entspannungsverdampfer (26a) zugeleitet. Dort wird durch Entspannungsverdampfung Dampf gewonnen, der zur Beheizung der Kolonne (6b) mitverwendet wird. Den Hauptanteil der erforderlichen Wärmeenergie liefert aber natürlich der aus dem Kopfdampf der Kolonne (6a) gewonnene Heizdampf. Die den Entspannungsverdampfer (26a) verlassende Schlempe wird mit der über den Sumpf abgeleiteten Schlempe der Kolonne (6b), die eine entsprechend niedrigere Temperatur aufweist, vermischt und in dem Entspannungsverdampfer (26b) erneut einer Entspannungsverdampfung unterworfen. Die hierbei gewonnene Dampfenergie dient zur Direktbeheizung der Kolonne (6c), wird aber teilweise auch im Wärmeaustauscher (29a) zur Vorerwärmung der Klarphase der Maische verwendet. Der kondensierte Dampf wird dann über die Leitung (31) abgelassen. Die aus dem Entspannungsverdampfer (26b) abfließende Schlempe wird mit der Schlempe der Kolonne (6c) vermischt und dient ebenfalls zur Vorerwärmung der Klarphase der Maische in dem Wärmeaustauscher (29b). Der in dem Entspannungsverdampfer (26b) gewonnene Dampf wird teilweise über Leitung (28b) in die Kolonne (6c) und teilweise über die Leitung (28c) in den Wärmeaustauscher (29a) geleitet. Die alkoholarme Schlempe fließt dann über Leitung (32) ab.

Das beschriebene Verfahren kann nun in vielfältiger Weise variiert werden. Es ist z. B. keineswegs erforderlich, an die Stufe der Alkohol-Aufkonzentrierung (6) immer auch noch eine Stufe der Alkohol-Absolutierung (11) anzuschließen. Wenn kein völlig wasserfreier Alkohol verlangt wird, braucht nur der der Alkohol-Aufkonzentrierung dienende Anlagenteil betrieben zu werden. In diesem Fall wird der Heizdampf der druckhöchsten Destillationskolonne der Alkohol-Aufkonzentrierung (6a) direkt zugeführt.

Die Ausnutzung der Wärmeenergie des Heizdampfes ist umso vollständiger, je mehr hintereinander geschaltete Destillationskolonnen vorgesehen sind. Dieser besseren Energieausnutzung stehen jedoch höhere Investitionskosten durch die Installation zusätzlicher Kolonnen gegenüber. Besonders günstige Ergebnisse werden bei dem erfindungsgemäßen Verfahren dann erhalten, wenn in der Alkohol-Aufkonzentrierung (6) drei hintereinander geschaltete Destillationskolonnen und in der Alkohol-Absolutierung (11) zwei hintereinander geschaltete Kolonnen eingesetzt werden. Die Energieausnutzung ist bei dem beschriebenen Verfahren so gut, daß weitere Kolonnen keine wesentliche Verbesserung der Energieausbeute mehr bringen. Während bei konventionellen Verfahren zur Rektifikation von Äthanol ohne wiederholte Nutzung der Dampfenergie nach dem Mehrstufenprinzip 4 bis 4,5 kg Dampf/Liter absolutem Alkohol verbraucht werden und bei zweifacher Dampfnutzung in zwei hintereinander geschalteten Kolonnen immer noch etwa 2,5 kg Dampf/Liter absolutem Alkohol benötigt werden, tritt bei dem erfindungsgemäßen Verfahren eine weitere erhebliche Energieeinsparung ein. So wurde bei Verwendung von zwei Kolonnen in der Alkohol-Aufkonzentrierung und einer Kolonne in der Alkohol-Absolutierung nur noch etwa 1,5 kg Dampf/Liter absolutem Alkohol gebraucht und schließlich beim Einsatz von drei Kolonnen in der Alkohol-Aufkonzentrierung und zwei Kolonnen in der Alkohol-Absolutierung sogar nur noch 0,9-1,0 kg Dampf/Liter absolutem Alkohol aufgewendet.

Das erfindungsgemäße Verfahren hat natürlich besondere Bedeutung bei der Auftrennung einer durch Fermentation gewonnenen vergorenen Maische. Selbstverständlich kann es jedoch auch zur Rektifikation jedes anderen wäßrigen, Alkohole enthaltenden Flüssigkeitsgemisches verwendet werden, wobei als Alkohole neben Äthanol auch Methanol, Propanol, Isopropanol, Butanol und/oder Azeton enthalten sein können.

Das Verfahren wird durch das nachfolgende Beispiel näher erläutert :

Beispiel

Aus einem Fermenter wird eine vergorene Maische mit einem Gehalt von 6-8 Gew.-% Äthanol und einer Temperatur von 33 °C entnommen und in einen Schwerkraft-Abscheider geleitet. Nach einer Verweilzeit von etwa 15 Minuten wird die im oberen Teil des Abscheiders entstandene Klarphase den Destillationskolonnen zugeleitet, während die sich im Abscheider absetzende, an Schwebstoffen reiche Phase in den Fermenter zurückgeleitet wird. Die Klarphase wird auf dem Weg zu den Kolonnen durch mehrere Wärmeaustauscher geleitet, so daß sie die Destillationskolonnen schon vorgewärmt erreicht. Sie wird hier parallel auf drei Destillationskolonnen der Alkohollaufkonzentrierung aufgeteilt, die nach dem Verfahren der Direktdampfeinspeisung gemäß Figur 3 betrieben werden. Der Kopfdampf dieser Wärmekolonnen wird in Wärmeaustauschern kondensiert, wobei sich als Kondensat ein Äthanol mit einem Gehalt von 94 Gew.-% bildet. Die Kolonne mit der höchsten Druckstufe wird mit 3,7 bar und einer Temperatur von 143 °C gefahren, die nachfolgende hat einen Druck von 1,1 bar und eine Temperatur von 110 °C, während die letzte Kolonne eine Druckstufe von 0,4 bar und eine Temperatur von 75 °C aufweist. Die den Kolonnen entnommene Schlempe wird gemäß Figur 4 einer Entspannungsverdampfung unterworfen und dadurch weitere Dampfenergie gewonnen.

Der 94 Gew.-% Äthanol wird dann in die Absolutierungs-Anlage eingeleitet und dort parallel auf zwei Kolonnen aufgeteilt. Der zum Betreiben der Anlage zur Verfügung stehende Dampf hat eine Temperatur von 212 °C und wird über einen Sumpfkocher der ersten Kolonne zugeleitet, die mit einem Druck von bis zu 20 bar gefahren wird. Aus dieser Kolonne destilliert über den Kopf ein azeotropes, wasserreiches Gemisch bestehend aus Äthanol, Wasser und Benzol ab, das über einem Sumpfkocher seine Energie an die nachfolgende Kolonne der Absolutierung abgibt, während über den Sumpf 99 Gew.-%iger Äthanol abgelassen wird.

Die azeotropen Destillate werden in einem zweistufigen Abscheider gesammelt und die organische Phase in die Absolutierungs-Kolonnen zurückgeleitet, während die wäßrige Phase, die etwa 6 Gew.-% Äthanol enthält, in die Kolonnen der Aufkonzentrierung gegeben wird. In dieser Anlage ergibt sich ein Energieverbrauch von 0,9 kg Dampf/Liter absoluten Äthanol.

**Patentansprüche**

1. Verfahren zur kontinuierlichen Rektifikation eines Alkohole enthaltenden Flüssigkeitsgemisches, insbesondere einer von Schwebstoffen weitgehend oder vollständig befreiten, vergorenen Maische, bei dem das Flüssigkeitsgemisch auf mindestens drei Destillationskolonnen mit von Kolonne zu Kolonne abnehmenden Betriebsdrücken parallel aufgeteilt wird, dadurch gekennzeichnet, daß man dem Sumpf der mit dem höchsten Druck gefahrenen Kolonne Direktdampf, der eine Temperatur von 130 bis 160 °C hat, zuführt, aus dem Kopfdampf der Kolonnen durch indirekten Wärmetausch Direktdampf gewinnt und diesen dem Abtriebsteil der jeweils nachfolgenden Kolonne zum direkten Heizen zuführt.

2. Verfahren nach Anspruch 1, dadurch gekennzeichnet, daß man den Sumpfablauf der Kolonnen entspannt und den erhaltenen Dampf der jeweils nachfolgenden Kolonne zuführt.

3. Verfahren nach Anspruch 1 oder 2, dadurch gekennzeichnet, daß man den durch Wärmetausch kondensierten, aufkonzentrierten Alkohol einer Azeotropdestillation zuführt und mit dem Kopfprodukt dieser Destillation den Direktdampf von 130 bis 160 °C für die mit dem höchsten Druck gefahrenen Destillationskolonne erzeugt.

4. Verfahren nach den Ansprüchen 1 bis 3, dadurch gekennzeichnet, daß eine vergorene Maische eingesetzt wird, deren Gehalt an Schwebestoffen in einem Abscheider auf weniger als 0,5 Gew.-%, vorzugsweise auf weniger als 0,1 Gew.-% gesenkt worden ist.

5. Verfahren nach den Ansprüchen 1 bis 3, dadurch gekennzeichnet, daß man ein wäßriges Flüssigkeitsgemisch einsetzt, das Methanol, Äthanol, Propanol, Isopropanol, Butanol und/oder Aceton enthalten kann.

6. Verfahren nach den Ansprüchen 1 bis 3, dadurch gekennzeichnet, daß in den der Alkohollaufkonzentrierung dienenden Destillationskolonnen Siebböden mit einem Lochdurchmesser von bis zu 20 mm verwendet werden, die mit Polytetrafluoräthylen überzogen sind.

**Claims**

1. In a process for the continuous rectification of an alcohol containing liquid mixture by distributing the liquid mixture in parallel flow into at least three distillation columnes having successively reduced pressures from column to column, which comprises feeding direct steam having or temperature of 130 °C to 160 °C for direct heat exchange to the sump of the column operated with the highest pressure ; generating direct steam by indirect heat exchange of water with the top vapor and feeding the resulting direct steam for direct heat exchange to the sump of the next lower-pressure column.

2. A process according to claim 1, which comprises expanding the spent wash of the column and feeding the vapor generated to the sump of the next lower pressure column.

3. A process according to claims 1-2, which comprises feeding the alcohol concentrated and conduced by heat exchange into an azeotropic distillation ; generating direct steam having a temperature of 130 °C to 160 °C by indirect heat exchange with the top product of the azeotropic distillation and feeding the direct steam the distillation column operating at the highest pressure.

4. A process as claimed in claims 1 to 3, wherein a fermented mash is employed in which the content of suspended substances has been reduced in a spearator to less than 0.5 % by weight, preferably to less than 0.1 % by weight.

5. A process as claimed in claims 1 to 3, wherein an aqueous liquid mixture which can contain methanol, ethanol, propanol, isopropanol, butanol and/or acetone is employed instead of a fermented mash.

6. A process as claimed in claim 1, wherein perforated plates which have perforations of a diameter not exceeding 20 nm and which are coated with polytetrafluoroethylene, are use in the distillation columns serving for the concentration of alcohol.

**Revendications**

1. Procédé pour la rectification continue d'un mélange de liquides contenant des alcools, en particulier d'une trempe fermentée, débarrassée en totalité ou en quasi-totalité des substances en suspension, dans lequel on partage le mélange liquide en l'envoyant en parallèle sur au moins trois colonnes de distillation travaillant à des pressions de service, qui diminuent d'une colonne à l'autre, procédé caractérisé en ce que l'on envoie aux produits de queue de la colonne travaillant à la pression la plus élevée de la vapeur de distillation directe ayant une température de 130 à 160 °C, que l'on produit, à partir de la vapeur de tête des colonnes, par l'intermédiaire d'un échange de chaleur indirecte, de la vapeur de distillation directe, et qu'on envoie cette dernière à la partie rectification de la colonne en aval pour le chauffage directe.

2. Procédé selon la revendication 1, caractérisé en ce qu'on détend les produits de queue s'écoulant des colonnes et qu'on amène la vapeur obtenue à la colonne en aval.

3. Procédé selon l'une quelconque des revendications 1 et 2, caractérisé en ce qu'on soumet l'alcool concentré, condensé par un échange de chaleur, à une distillation azéotropique et on produit de la vapeur de distillation directe ayant une température de 130 à 160 °C pour la colonne de distillation travaillant à la pression à plus élevée, à partir de produit de tête de cette distillation.

4. Procédé selon l'une quelconque des revendications 1 à 3, caractérisé en ce que l'on utilise une trempe fermentée dont la teneur en substances solides a été abaissée dans un séparateur à moins de 0,5 % en poids, de préférence à moins de 0,1 % en poids.

5. Procédé selon l'une quelconque des revendications 1 à 3, caractérisé en ce qu'on utilise à la place d'une trempe fermentée un mélange aqueux de liquides, pouvant contenir du méthanol, de l'éthanol, du propanol, de l'isopropanol, du butanol et/ou de l'acétone.

6. Procédé selon l'une quelconque des revendications 1 à 3, caractérisé en ce que dans les colonnes de distillation servant à la concentration des alcools, il y a des plateaux perforés ayant un diamètre de perforation allant jusqu'à 20 mm, plateaux revêtus de polytétrafluoréthylène.

# FIG.1

FIG. 2

FIG.3

FIG. 4